# EUROPEAN PATENT APPLICATION

(11) **EP 2 773 155 A1**
(43) Date of publication of application: **03.09.2014**
(21) Application number: 12843250.7
(22) Date of filing: 24.10.2012
(51) Int. Cl.: H04W 52/34, H04J 11/00, H04W 72/04

(54) **MOBILE COMMUNICATION METHOD AND RADIO BASE STATION**

(30) Priority: 27.10.2011 JP 2011236507
(71) Applicant: NTT DOCOMO, INC., Chiyoda-Ku Tokyo 100-6150 (JP)
(72) Inventor: SAGAE, Yuta, Tokyo 100-6150 (JP); UMESH, Anil, Tokyo 100-6150 (JP); UMEDA, Hiromasa, Tokyo 100-6150 (JP)
(74) Representative: HOFFMANN EITLE
(86) International application number: PCT/JP2012/077442
(87) International publication number: WO 2013/061992

(57) **Abstract**

The present invention enables, without defining a new band, use of a network signaling value for multi-cluster communication in an existing band where no network signaling value has been defined. A mobile communication method according to the present invention includes: a step A of notifying, by a radio base station eNB, a mobile station UE of a network signaling value through "RRC Reconfiguration," the mobile station UE being performing single cluster communication using one component carrier in a supported band; and a step B of reducing, by the mobile station UE, transmission power in the single cluster communication on the basis of the network signaling value.

## Description

### TECHNICAL FIELD

The present invention relates to a mobile communication method and a radio base station.

### BACKGROUND ART

In LTE (Long Term Evolution), a protection standard is provided to protect another mobile communication system operated in an adjacent band (see Non-patent documents 1 and 2).

In this connection, LTE is specified such that "A-MPR (Additional-Maximum Power Reduction)" is applied to a case where it is difficult to conform to the protection standard. The "A-MPR" allows a reduction of maximum allowable transmission power in a mobile station UE.

Specifically, in an area to which the "A-MPR" can be applied, a radio base station eNB broadcasts a network signaling value called "NS (Network Signaling)" or "additional Spectrum Emission" defined for a supported band to thereby make a notification on how to apply the "A-MPR."

### PRIOR ART DOCUMENT

### NON-PATENT DOCUMENT

Non-patent document 1: 3GPP TS36.101
Non-patent document 2: 3GPP TS36.104
Non-patent document 3: 3GPP TS36.331

### SUMMARY OF THE INVENTION

At present, the network signaling values are defined only for limited bands among the existing bands.

In addition, even if a network signaling value is newly defined in an existing band, an existing mobile station UE supporting the existing band cannot understand the newly-defined network signaling value.

For this reason, in order to avoid the above phenomenon, LTE is specified such that a new network signaling value must be defined in a newly-defined band.

Meanwhile, LTE-Release 10 is specified such that multi-cluster communication using multiple subcarrier clusters in a single component carrier (CC) can be performed.

Here, it is known that power leakage to an adjacent band during the execution of multi-cluster communication is larger than that during the execution of single cluster communication using a single component carrier (a single subscarrier in one component carrier), namely, SC-FDMA (Single Carrier-FDMA) communication.

For this reason, there is an expected case where a network signaling value for multi-cluster communication needs to be newly defined in an existing band where no network signaling value has been defined.

However, in the LTE specifications defined so far, the defining of a network signaling value for multi-cluster communication requires a new band to be defined and used, as described above.

The present invention was therefore made in view of the foregoing problem, and has an objective to provide a mobile communication method and a radio base station, which, without defining a new band, enable use of a network signaling value for multi-cluster communication in an existing band where a network signaling value have not been defined yet.

A first feature of the present invention is summarized as a mobile station method including: a step A of notifying, by a radio base station, a mobile station of a network signaling value through an individual signal, the mobile station being performing single cluster communication using one component carrier in a supported band; and a step B of reducing, by the mobile station, transmission power in the single cluster communication on the basis of the network signaling value.

A second feature of the present invention is summarized as a radio base station eNB, including a transmitter unit 12 configured to notify a mobile station UE of a network signaling value through an individual signal, the mobile station UE being performing single cluster communication using one component carrier in a supported band.

A third feature of the present invention is summarized as a mobile station is configured to, if not notified of a network signaling value through an individual signal, reduce transmission power in multi-cluster communication using multiple subcarrier clusters in one component carrier in a supported band, on the basis of a network signaling value notified of through a broadcast signal, as in a case of single cluster communication using a single component carrier in one component carrier.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a diagram for explaining concepts of single cluster communication and multi-cluster communication performed in the mobile communication system according to the first embodiment of the present invention.
[Fig. 3] Fig. 3 is a functional block diagram of a radio base station according to the first embodiment of the present invention.
[Fig. 4] Fig. 4 is a sequence diagram illustrating an operation of the mobile communication system according to the first embodiment of the present invention.

### MODE FOR CARRYING OUT THE INVENTION

### (Mobile Communication System according to First Embodiment of the Present Invention)

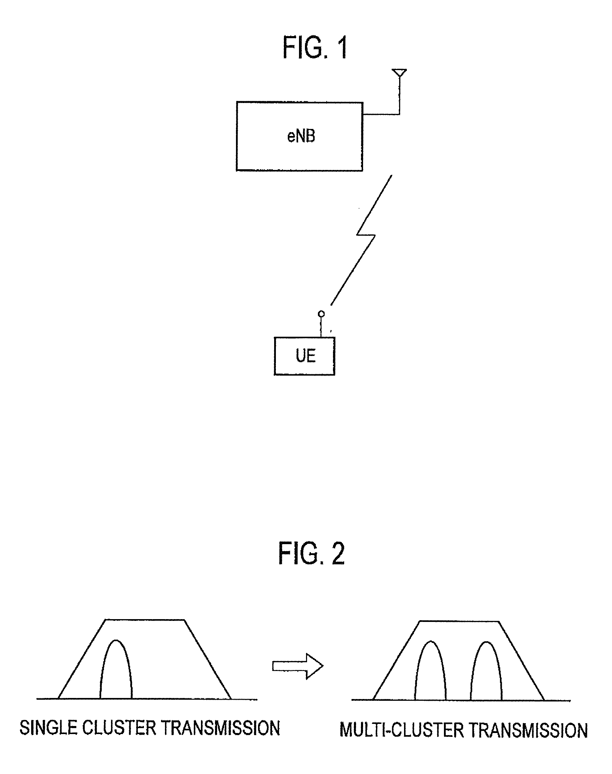

A mobile communication system according to a first embodiment of the present invention is described with reference to Fig. 1 to Fig. 4. In all the drawings for describing this embodiment, components having the same function are assigned the same reference numeral, and the duplicated description thereof is omitted.

The mobile communication system according to this embodiment supports LTE-Release 10, and includes a radio base station eNB and a mobile station UE as illustrated in Fig. 1.

In addition, in the mobile communication system according to this embodiment, the radio base station eNB and the mobile station UE are configured to be capable of performing single cluster communication using a single component carrier (a single subcarrier cluster in one component carrier) and multi-cluster communication using multiple subcarrier clusters in one component carrier, as illustrated in Fig. 2.

Incidentally, in the mobile communication system according to this embodiment, the radio base station eNB and the mobile station UE may be configured to be capable of performing carrier aggregation (CA: Carrier Aggregation) communication using multiple component carriers.

Here, the radio base station eNB and the mobile station UE are configured to be capable of performing multi-cluster transmission in each of multiple component carriers. In this case, the present invention can be applied to each of the component carriers.

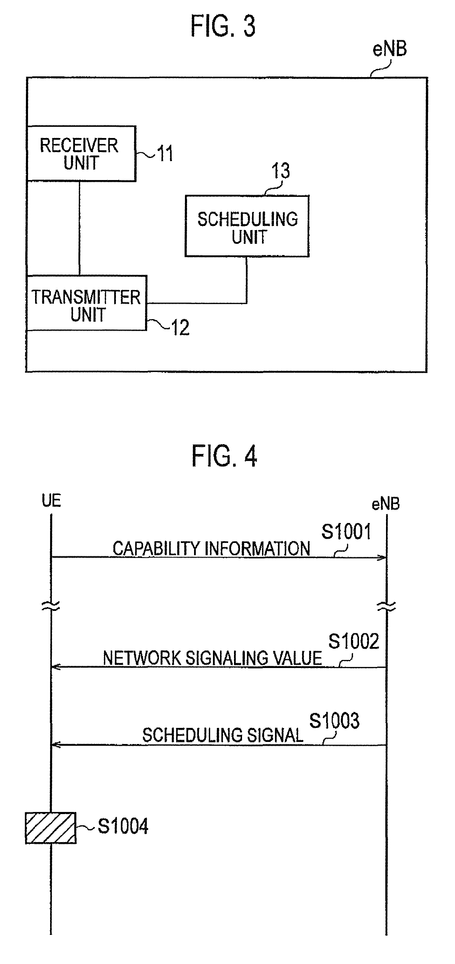

As illustrated in Fig. 3, the radio base station eNB includes a receiver unit 11, a transmitter unit 12 and a scheduling unit 13.

The receiver unit 11 is configured to receive various kinds of signals from mobile stations UE located in a cell under the control of the radio base station eNB.

For example, the receiver unit 11 is configured to receive "UE Capability Information (capability information)" of a mobile station UE from the mobile station UE.

The "UE Capability Information" includes, for example, information on whether or not the mobile station UE supports multi-cluster communication and carrier aggregation communication, and other information.

The transmitter unit 12 is configured to transmit broadcast signals and individual signals to mobile stations UE.

For example, the transmitter unit 12 is configured to transmit a broadcast signal to mobile stations UE located in the cell under the control of the radio base station eNB, thereby notifying the mobile stations UE of a network signaling value (for example, "NS" or "additional Spectrum Emission") for a band supported by the radio base station eNB.

In addition, the transmitter unit 12 is configured to transmit "RRC Reconfiguration, "which is an individual signal, to a mobile station UE in a "Connected state" in the cell under the control of the radio base station eNB, thereby notifying the mobile station UE of a network signaling value (for example, "NS" or "additional Spectrum Emission") for multi-cluster communication in the band supported by the radio base station eNB.

For example, the transmitter unit 12 may be configured to notify of the network signaling value by using an information element (for example, an information element called "additional Spectrum Emission Pcell, " "additional Spectrum Emission CA" or the like) in the "RRC Reconfiguration."

Here, the information elements called "additional Spectrum Emission Pcell, " "additional Spectrum Emission CA" and the like (see TS36.331 of 3GPP) are information elements each used to notify of a network signaling value for carrier aggregation communication.

Incidentally, the transmitter unit 12 may be configured to notify the mobile station UE of the network signaling value through the "RRC Reconfiguration" before the mobile station UE starts to use a predetermined function (for example, a function added in LTE-Release 10 or later release).

For example, the transmitter unit 12 may be configured to notify the mobile station UE of the network signaling value through the "RRC Reconfiguration" before the mobile station UE starts multi-cluster communication.

In this respect, the mobile station UE is configure to, if not notified of the network signaling value through the "RRC Reconfiguration, reduce transmission power in multi-cluster communication using multiple subcarrier clusters in one component carrier in a supported band, on the basis of the network signaling value notified of through the broadcast signal, as in the case of single cluster communication using a single component carrier in one component carrier.

Instead, the transmitter unit 12 is configured to transit a scheduling signal to the mobile station UE in the "Connected state" in the cell under the control of the radio base station eNB, in accordance to an instruction from the scheduling unit 13.

For example, the transmitter unit 12 is configured to transmit the scheduling signal for performing single cluster communication or multi-cluster communication, to the mobile station UE in the "Connected state" in the cell under the control of the radio base station eNB.

In this respect, the transmitter unit 12 may be configured to transmit "RRC Reconfiguration" for setting the configuration for carrier aggregation communication, to the mobile station UE in the "Connected state" in the cell under the control of the radio base station eNB.

The scheduling unit 13 is configured to perform scheduling processing for the mobile station UE in the "Connected state" in the cell under the control of the radio base station eNB, and to give the transmitter unit 12 an instruction based on the scheduling processing.

For example, the scheduling unit 13 may be configured to determine whether or not to cause the mobile station UE to perform multi-cluster communication, on the basis of the "UE Capability Information" received by the receiver unit 11.

Hereinafter, an exemplary operation of the mobile communication system according to this embodiment is described with reference to Fig. 4.

As illustrated in Fig. 4, in step S1001, a mobile station UE transmits the "UE Capability Information (capability information) " supported by the mobile station UE to a radio base station eNB in response to a "UE Capability Enquiry" from the radio base station eNB, after establishment of an RRC connection with the radio base station eNB.

When the radio base station eNB determines to cause the mobile station UE to perform multi-cluster communication on the basis of the received "UE Capability Information," the radio base station eNB transmits the "RRC Reconfiguration" to notify the mobile station UE of a network signaling value for multi-cluster communication in a band supported by the radio base station eNB in step S1002, and transmits the scheduling signal for causing the mobile station UE to perform multi-cluster communication in step S1003.

Incidentally, in step S1002, the radio base station eNB does not have to notify the mobile station UE of the network signaling value for multi-cluster communication in the band supported by the radio base station eNB, if the radio base station eNB determines that such notification is not particularly necessary.

In step S1004, the mobile station UE performs multi-cluster communication in the band supported by the radio base station eNB on the basis of the received scheduling signal.

Here, the mobile station UE reduces the transmission power in the multi-cluster communication on the basis of the network signaling value for multi-cluster communication notified of through the received "RRC Reconfiguration."

In this respect, the mobile station UE also receives the network signaling value for the band supported by the radio base station eNB, the network signaling value notified of through the broadcast signal transmitted by the radio base station eNB. Thus, if the mobile station UE does not receive the aforementioned network signaling value for multi-cluster communication in step S1002, the mobile station UE may reduce the transmission power in the multi-cluster communication on the basis of the network signaling value notified of through the broadcast signal.

In the mobile communication system according to the first embodiment of the present invention, the radio base station eNB is capable of notifying of the network signaling value for multi-cluster communication in the band supported by the radio base station eNB through the "RRC Reconfiguration, " and thereby enables, without defining a new band, use of the network signaling value for multi-cluster communication in the band supported by the radio base station eNB.

The features of the above-described embodiment may also be expressed as follows.

A first feature of this embodiment is summarized as a mobile station method including: a step A of notifying, by a radio base station eNB, a mobile station UE of a network signaling value through an "RRC Reconfiguration (individual signal)," the mobile station UE being performing single cluster communication using one component carrier in a supported band; and a step B of reducing, by the mobile station UE, transmission power in the single cluster communication on the basis of the network signaling value.

In the first feature of this embodiment, in the step A, the radio base station eNB may notify the mobile station UE of the network signaling value before the mobile station UE starts multi-cluster communication using multiple subcarrier clusters in the one component carrier.

A second feature of this embodiment is summarized as a radio base station eNB, including a transmitter unit 12 configured to notify a mobile station UE of a network signaling value through an "RRC Reconfiguration, " the mobile station UE being performing single cluster communication using one component carrier in a supported band.

In the second feature of this embodiment, before the mobile station UE starts multi-cluster communication using multiple subcarrier clusters in the one component carrier, the transmitter unit 12 may notify the mobile station UE of the network signaling value.

A third feature of this embodiment is summarized as a mobile station UE is configured to, if not notified of a network signaling value through an "RRC Reconfiguration," reduce transmission power in multi-cluster communication using multiple subcarrier clusters in one component carrier in a supported band, on the basis of a network signaling value notified of through a broadcast signal, as in a case of single cluster communication using a single component carrier in one component carrier.

It should be noted that the foregoing operations of the radio base station eNB and the mobile station UE may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the radio base station eNB and the mobile station UE. Otherwise, the storage medium and the processor may be provided as discrete components inside the radio base station eNB and the mobile station UE.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2011-236507 (filed on October 27, 2011) is incorporated by reference in the present specification.

### INDUSTRIAL APPLICABILITY

As described above, the present invention is capable of providing a mobile communication method and a radio base station which, without defining a new band, enable use of a network signaling value for multi-cluster communication in an existing band for which no network signaling value has been defined.

### EXPLANATION OF THE REFERENCE NUMERALS

- UE: mobile station
- eNB: radio base station
- 11: receiver unit
- 12: transmitter unit
- 13: scheduling unit

## Claims

1. A mobile communication method comprising:
a step A of notifying, by a radio base station, a mobile station of a network signaling value through an individual signal, the mobile station being performing single cluster communication using one component carrier in a supported band; and
a step B of reducing, by the mobile station, transmission power in the single cluster communication on the basis of the network signaling value.

2. The mobile communication method according to claim 1, wherein in the step A, the radio base station notifies the mobile station of the network signaling value before the mobile station starts multi-cluster communication using a plurality of subcarrier clusters in the one component carrier.

3. A radio base station, comprising a transmitter unit configured to notify a mobile station of a network signaling value through an individual signal, the mobile station being performing single cluster communication using one component carrier in a supported band.

4. The radio base station according to claim 3, wherein before the mobile station starts multi-cluster communication using a plurality of subcarrier clusters in the one component carrier, the transmitter unit notifies the mobile station of the network signaling value.

5. A mobile station, wherein the mobile station is configured to, if not notified of a network signaling value through an individual signal, reduce transmission power in multi-cluster communication using a plurality of subcarrier clusters in one component carrier in a supported band, on the basis of a network signaling value notified of through a broadcast signal, as in a case of single cluster communication using a single component carrier in one component carrier.
